(19) Europäisches Patentamt

European Patent Office

Office européen des brevets

(11) Publication number: **0 546 447 B1**

(12) **EUROPEAN PATENT SPECIFICATION**

(45) Date of publication of patent specification: **15.03.95**　(51) Int. Cl.6: **C09K 5/04**

(21) Application number: **92120644.7**

(22) Date of filing: **03.12.92**

(54) **Improvements in refrigeration cycles.**

(30) Priority: **06.12.91 IL 100268**

(43) Date of publication of application:
**16.06.93 Bulletin  93/24**

(45) Publication of the grant of the patent:
**15.03.95 Bulletin  95/11**

(84) Designated Contracting States:
**AT BE CH DE DK ES FR GB GR IE IT LI LU MC
NL PT SE**

(56) References cited:
**EP-A- 0 126 237**　**EP-A- 0 271 989**
**EP-A- 0 385 737**　**EP-A- 0 402 937**
**DE-A- 1 953 765**　**US-A- 4 482 465**
**US-A- 5 063 747**

(73) Proprietor: **Kaminsky, Peter
3/3 Sokolov Street
Beer-Sheva (IL)**

(72) Inventor: **Kaminsky, Peter
3/3 Sokolov Street
Beer-Sheva (IL)**

(74) Representative: **Perani, Aurelio et al
c/o JACOBACCI & PERANI S.p.A
Via Visconti di Modrone, 7
I-20122 Milano (IT)**

**Description**

The present invention relates to a method of improving the performance of refrigeration cycles, and to novel refrigerants used therein.

It is well known in the art to employ various refrigerants, such as the fluoral compounds generally known under the name of "Freon", or of various mixtures of different gases, such as propane, butane, ethane, etc. These are employed in various refrigeration cycles as refrigerants, are compressed in a compressor to condensation, thereby gaining energy and are expanded in a heat exchanger by removing heat from the surroundings.

It has now been surprisingly found, and this is an object of the invention, that it is possible to increase the efficiency of these cycles by adding additive amounts of a gas that does not undergo condensation under the conditions at which the refrigerant gas condensates.

It has further been found, and this is another object of the invention, that it is possible to reduce the power needed in order to compress the refrigerant and to cause its condensation.

The method according to the invention comprises adding to the refrigerant an additive gas which is inert with respect to the refrigerant, and which does not condense under the condensing condition of the refrigerant, in an amount effective to reduce the power required in order to perform the compression step.

The amount of additive gas employed will vary according to the refrigerant used and the additive gas, and the optimal amount can be easily determined by the skilled person, case by case, by adding different amounts of the additive gas and measuring the power consumption obtained with each mixture. In most cases, however, it is not desirable to add additive gases in an amount higher than 20% by volume of the total gas mixture in the compressed state.

A variety of gases can be employed as additive gases, the main requirement therefrom being that the gas does not react with the refrigerant. Some illustrative but non-limitative gases include methane, ethylene, $CO_2$ and $N_2$, and their mixtures.

Similarly, many different refrigerants can be employed, and representative refrigerants include chlorofluoromethane, n-butane, ammonia, propylene, propane, ethane, methylamine, ethylamine, methyl formate, and their mixtures.

Refrigerant mixtures comprising condensable and non-condensable gases according to the invention are also novel and as a class and as such also form part of the present invention.

The above characteristics and advantages of the invention will be better understood through the following illustrative but non-limitative description of preferred embodiments. In all examples below, different refrigerant mixtures are compared with similar mixtures containing non-condensable gases according to the invention. All precentages of such mixtures are in volume percent, based on the total volume of the refrigerant mixture in the compressed state. Pressures are in MPa, and in each table below, mixtures according to the invention are compared to prior art refrigerants, the power being compared in each case to the power required for the compression of the prior art refrigerant, such power being taken in each table as 100.

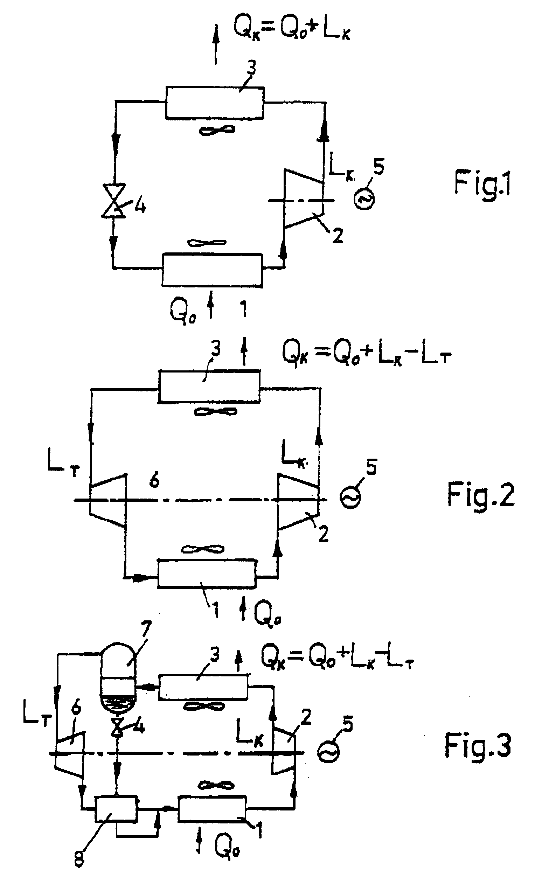

In order to illustrate the invention, Figs. 1 to 3 are provided, in which Fig. 1 and 2 are prior art refrigeration cycles, comprising a throttle (Fig. 1) or a turbine (Fig. 2), and Fig. 3 illustrates a cycle according to the invention. In the figures the numerals indicate the following parts: 1 - evaporator; 2 - compressor; 3 - condensator; 4 - throttle; 5 - motor; 6 - turbine; 7 - separator; 8 - evaporator-condensator (liquid refrigerant-gas refrigerant).

Example 1

Chlorodifluoromethane (CDFM), which is a commonly employed refrigerant, is compared to a mixture of 90% of chlorodifluoromethane with 10% methane. Methane itself is non-condensable under the conditions in which CDFM is used, which are 250 K for the evaporator, and 320 K for the condensator. The results are shown in Table I, in which it can be seen that the comparative power decreases to 75.19% upon the addition of 10% methane.

# EP 0 546 447 B1

## Table I

| No. | Refr | EVP | CDP | R | CP |
|-----|------|-----|-----|---|-----|
| 1 | CDFM | 0.2169 | 1.8066 | 8.329 | 100 |
| 2 | Methane | - | - | - | - |
| 3 | CDFM (90%) + Methane (10%) | 0.4176 | 2.0073 | 4.806 | 75.19 |

REFR = Refrigerant name

EVP = Evaporation Pressure, MPa

CDP = Condensation Pressure, MPa

CP = Comparative Power, %

CDFM = chlorodifluoromethane

R = Ratio number; $R = \dfrac{CDP}{EVP}$

### Example 2

n-Butane is compared with its mixture with 10% of methane. The results are shown in Table II. Here, again, the comparative power decreases to 69.71%. The above values are based on the same evaporation and condensation temperatures as in Example 1.

Table II

| No. | Refr | EVP | CDP | R | CP |
|-----|------|-----|-----|---|-----|
| 4 | n-Bu | 0.039159 | 0.4573 | 11.68 | 100 |
| 5 | n-Bu (90%) + Methane (10%) | 0.8996 | 0.5081 | 5.648 | 69.71 |
| n-Bu = n-Butane | | | | | |

### Example 3

The propylene as a refrigerant has been compared with different mixtures of propylene and ethylene, as shown in Table III. As it can be seen, in each case mixtures are more effective than propylene alone, and the higher the content of ethylene the most effective refrigerant mixture. However, as will be appreciated, too high a content of inert gas is undesirable for technical reasons. The upper values are based on an evaporation temperature 285 K and a condensation temperature of 335 K.

3

Table III

| No. | Refr | EVP | CDP | R | CP |
|-----|------|-----|-----|---|-----|
| 6 | Propylene | 0.82165 | 2.6284 | 3.1989 | 100 |
| 7 | Ethylene | - | - | - | - |
| 8 | Propylene (90%) + Ethylene (10%) | 1.1137 | 2.9204 | 2.6222 | 89.27 |
| 9 | Propylene (85%) + Ethylene (15%) | 1.2855 | 3.0922 | 2.4054 | 84.90 |
| 10 | Propylene (80%) + Ethylene (20%) | 1.4788 | 3.2855 | 2.2218 | 81.03 |

## Example 4

Table IV shows the effect of the addition of methane in different proportions to a refrigerant mixture comprising 60% propane, 30% n-butane and 10% ethane. The improvement attained is self-evident from Table IV, and in any case additional methane improves over the pure refrigerant mixture. The values in Table IV are based on 240 K of evaporation and 305 K condensation.

Table IV

| No. | Refr | EVP | CDP | R | CP |
|-----|------|-----|-----|---|-----|
| 11 | Mixture A | 0.1927 | 1.3426 | 6.966 | 100 |
| 12 | Mixture A (95%) + Methane (5%) | 0.2633 | 1.4132 | 5.366 | 87.32 |
| 13 | Mixture A (90%) + Methane (10%) | 0.3419 | 1.4917 | 4.363 | 78.10 |

## Example 5

Methylamine is compared to its mixture with a very small amount of ethylene (3%). As it can be seen from Table V, even this small addition of additive gas leads to a dramatic improvement in the performance of the refrigerant. These results are based on 258 K of evaporation temperature, and 318 K condensation.

Table V

| No. | Refr | EVP | CDP | R | CP |
|-----|------|-----|-----|---|-----|
| 14 | Methylamine | 0.067 | 0.659 | 9.882 | 100 |
| 15 | Ethylene | - | - | - | - |
| 16 | Methylamine (97%) + Ethylene (3%) | 0.149 | 0.858 | 5.760 | 72.1 |

## Example 6

Ammonia was compared to its mixture with small amounts (5%) of nitrogen. The results are shown in Table VI, and show significant improvement over the use of pure ammonia. This is particularly interesting, as ammonia is a widespread refrigerant for many applications. The results in Table VI are based on 233 K evaporation temperature and 303 K condensation temperature.

Table VI

| No. | Refr | EVP | CDP | R | CP |
|---|---|---|---|---|---|
| 17 | Ammonia | 0.07124 | 1.1871 | 16.664 | 100 |
| 18 | $N_2$ | - | - | - | - |
| 19 | Ammonia (95%) + $N_2$ (5%) | 0.1337 | 1.2496 | 9.345 | 72.04 |

Example 7

Ethylamine was tested as a refigerant, both alone and with the addition of only 1% $CO_2$. As can be seen from Table VII, the improvement achieved is drastic with even very low amounts of $CO_2$. The results in Table VII are based on 258 K evaporation temperature and 318 K condensation temperature.

Table VII

| No. | Refr | EVP | CDP | R | CP |
|---|---|---|---|---|---|
| 20 | Ethylamine | 0.0222 | 0.2765 | 12.42 | 100 |
| 21 | $CO_2$ | - | - | - | - |
| 22 | Ethylamine (99%) + $CO_2$ (1%) | 0.0446 | 0.3619 | 8.12 | 78.2 |

Example 8

Table VIII illustrates the improvement achieved by the addition of 2% $CO_2$ to methyl formate. The results are self-evident, and need not be further explained. The results in Table VIII are based on 278 K of evaporation temperature, 338 K condensation temperature.

Table VIII

| No. | Refr | EVP | CDP | R | CP |
|---|---|---|---|---|---|
| 23 | Methyl formate | 0.0321 | 0.2570 | 8.01 | 100 |
| 24 | Methyl formate (98%) + $CO_2$ (2%) | 0.1088 | 0.4515 | 4.15 | 62.71 |

All the above has been provided for the purpose of illustration, and is not intended to constitute a limitation of the invention.

Many different mixtures, additive gases, operating conditions and the like can be employed, all without exceeding the scope of the invention.

**Claims**

1. A method of improving the performance of a refrigerant, comprising adding to the refrigerant an additive gas which is inert with respect to the refrigerant and which does not condense under the condensing conditions of the refrigerant in an amount effective to reduce the power required in order to perform the compression step.

2. A method according to claim 1, wherein the additive gas in present in an amount of up to 20% by volume of the total gas mixture in the compressed state.

3. A method according to claim 1 or 2, wherein the additive gas is selected from methane, ethylene, $CO_2$, $N_2$ and their mixtures.

4. A method according to any one of claims 1 to 8, wherein the refrigerant is selected from chlorfluoromethane, n-butane, ammonia, propylene, propane, ethane, methylamine, ethylamine, methyl formate and their mixtures.

5. A refrigerant comprising a condensable gas together with additive amounts of a gas which does no condense under the conditions in which the refrigerant condenses.

6. A refrigerant according to claim 5, wherein the additive gas is present in amounts of up to 20% by volume of the total gas mixture in the compressed state.

7. A refrigerant according to claim 6, wherein the additive gas is selected from methane, ethylene, $CO_2$, $N_2$ and their mixtures.

8. Apparatus for carrying out the method of any one of claims 1 to 4, essentially as described and illustrated, and with particular reference to Fig. 3.

**Patentansprüche**

1. Verfahren zur Verbesserung der Leistungsfähigkeit eines Kühlmittels, das das Hinzufügen eines zusätzlichen Gases, das in Bezug auf das Kühlmittel inaktiv ist und unter den Kondensationsbedingungen des Külmittels nicht kondensiert, zu dem Kühlmittel in einer Menge umfasst, die wirksam die zur Durchführung des Verdichtungsschritts notwendige Energie zu reduzieren.

2. Verfahren nach Anspruch 1, wobei das zusätzliche Gas in einer Menge von bis zu 20% des Volumens der gesamten Gasmischung im verdichteten Zustand vorhanden ist.

3. Verfahren nach Anspruch 1 oder 2, wobei das zusätzliche Gas unter Methan, Äthylen, $CO_2$, $N_2$ und Gemischen hiervon ausgewählt wird.

4. Verfahren nach einem der Ansprüche 1 bis 8, wobei das Kühlmittel unter Chlorfluormethan, n-Butan, Ammoniakgas, Propylen, Propan, Äthan, Methylamin, Äthylamin, Methylformiat und Gemischen hiervon ausgewählt wird.

5. Kühlmittel, das ein kondensierbares Gas zusammen mit zusätzlichen Mengen eines Gases enthält, das unter den Bedingungen, unter denen das Kühlmittel kondensiert, nicht kondensiert.

6. Kühlmittel nach Anspruch 5, wobei das zusätzliche Gas in Mengen von bis zu 20% des Volumens der gesamten Gasmischung im verdichteten Zustand vorhanden ist.

7. Kühlmittel nach Anspruch 6, wobei das zusätzliche Gas unter Methan, Äthylen, $CO_2$, $N_2$ und Gemischen hiervon ausgewählt wird.

8. Vorrichtung, um das Verfahren irgendeines der Ansprüche 1 bis 4 auszuführen, im wesentlichen wie beschrieben und dargestellt, und im Besonderen auf die Fig.3 bezogen.

**Revendications**

1. Procédé pour améliorer la performance d'un réfrigérant, comprenant l'addition au réfrigérant d'un gaz additif, qui est inerte vis-à-vis du réfrigérant et qui ne se condense pas dans les conditions de condensation du réfrigérant, en une quantité efficace pour réduire la puissance nécessaire à la mise en oeuvre de l'étape de compression.

2. Procédé selon la revendication 1, dans lequel le gaz additif est présent en une quantité allant jusqu'à 20% en volume du mélange total de gaz à l'état comprimé.

3. Procédé selon la revendication 1 ou 2, dans lequel le gaz additif est choisi parmi le méthane, l'éthylène, $CO_2$, $N_2$ et leurs mélanges.

4. Procédé selon l'une quelconque des revendications 1 à 8, dans lequel le réfrigérant est choisi parmi le chlorofluorométhane, le n-butane, l'ammoniac, le propylène, le propane, l'éthane, la méthylamine, l'éthylamine, le formiate de méthyle et leurs mélanges.

5. Réfrigérant comprenant un gaz condensable ainsi que des quantités additives d'un gaz qui ne se condense pas dans les conditions dans lesquelles le réfrigérant se condense.

6. Réfrigérant selon la revendication 5, dans lequel le gaz additif est présent en quantités allant jusqu'à 20% en volume du mélange total de gaz à l'état comprimé.

7. Réfrigérant selon la revendication 6, dans lequel le gaz additif est choisi parmi le méthane, l'éthylène, $CO_2$, $N_2$ et leurs mélanges.

8. Appareil pour mettre en oeuvre le procédé selon l'une quelconque des revendications 1 à 4, essentiellement tel qu'il est décrit et illustré, et particulièrement illustré sur la figure 3.

$$Q_K = Q_o + L_K$$

Fig.1

$$Q_K = Q_o + L_R - L_T$$

Fig.2

$$Q_K = Q_o + L_K - L_T$$

Fig.3